# EUROPÄISCHE PATENTANMELDUNG

(11) **EP 4 420 753 A1**
(43) Veröffentlichungstag der Anmeldung: **28.08.2024**
(21) Anmeldenummer: 23020081.8
(22) Anmeldetag: 21.02.2023

(54) **VERFAHREN UND ANLAGE ZUR BEREITSTELLEUNG EINER WASSERSTOFFFRAKTION**

(71) Anmelder: Linde GmbH, 82049 Pullach (DE)
(72) Erfinder: Höfel, Torben, 82049 Pullach (DE)
(74) Vertreter: Reuß, Stephanie

(57) **Zusammenfassung**

Es wird ein Verfahren (100) zur Bereitstellung einer Wasserstofffraktion (113) vorgeschlagen, bei dem ein Trenneinsatz (103), der Wasserstoff, Methan und höhere Kohlenwasserstoffe enthält, einer Trennung (30) unterworfen wird, in der der Trenneinsatz (103) als ein erster Kondensationseinsatz (103) unter Erhalt eines kondensierten Anteils (104) und unter Verbleib eines unkondensierten Anteils (105) einer ersten Kondensation (31) unterworfen wird, ein zweiter Kondensationseinsatz (115) unter Erhalt eines kondensierten Anteils (116) und unter Verbleib eines unkondensierten Anteils (111) einer zweiten Kondensation (34, 33) unterworfen wird, ein Druckwechseladsorptionseinsatz (112) unter Erhalt der Wasserstofffraktion (113) und eines Druckwechseladsorptionsrestgases (114) einer Druckwechseladsorption (36) unterworfen wird, der zweite Kondensationseinsatz (115) unter Verwendung des Druckwechseladsorptionsrestgases (114) oder eines Teils hiervon und einer Rückführteilmenge (118) des kondensierten Anteils (116) des zweiten Kondensationseinsatzes (115) gebildet wird, der Druckwechseladsorptionseinsatz (112) unter Verwendung des unkondensierten Anteils (105) des ersten Kondensationseinsatzes (103) oder eines Teils hiervon und des unkondensierten Anteils des zweiten Kondensationseinsatzes (111) oder eines Teils hiervon gebildet wird, das Bilden des zweiten Kondensationseinsatzes (115) ein Verdichten (37) des Druckwechseladsorptionsrestgases (114) oder von dessen zur Bildung des zweiten Kondensationseinsatzes (115) verwendetem Teil und ein Entspannen, Verdampfen und Verdichten (37) der Rückführteilmenge (118) umfasst, und die zweite Kondensation (34, 33) eine Wärmeübertragung von dem zweiten Kondensationseinsatz (115) auf die Rückführteilmenge (118) umfasst. Eine entsprechende Anlage ist ebenfalls Gegenstand der Erfindung.

## Beschreibung

Die Erfindung betrifft ein Verfahren und eine Anlage zur Bereitstellung einer Wasserstofffraktion.

### Hintergrund

Verfahren und Anlagen zum Steamcracken von Kohlenwasserstoffen sind beispielsweise im Artikel "Ethylene" in Ullmann's Encyclopedia of Industrial Chemistry, Onlineausgabe, 15. April 2009, DOI: 10.1002/14356007.a10_045.pub2, beschrieben. Das Steamcracken (engl. Steam Cracking, im Deutschen auch als Dampfspalten bezeichnet) wird vorwiegend zur Gewinnung von kurzkettigen Olefinen wie Ethylen und Propylen, Diolefinen wie Butadien, oder von Aromaten eingesetzt, ist jedoch nicht auf die Gewinnung solcher Verbindungen beschränkt.

Beim Steamcracken werden Komponentengemische (auch als Spaltgase oder Rohgase bezeichnet) erhalten, die zur Gewinnung der gewünschten Einzelkomponenten geeigneten Aufbereitungssequenzen unterworfen werden. Typischerweise erfolgt dabei in einem ersten Abschnitt (engl. Front-End Section) einer entsprechenden Aufbereitungssequenz eine Entfernung schwerer Verbindungen, falls vorhanden, und danach eine sogenannte Rohgasverdichtung und Sauergasentfernung. Nach der Aufbereitung in dem ersten Abschnitt erfolgt eine Fraktionierung, in der durch thermische Trennverfahren unterschiedliche Fraktionen gebildet und bei Bedarf weiter aufgetrennt werden. Zu Details sei auf den erwähnten Artikel "Ethylene" in Ullmann's Encyclopedia of Industrial Chemistry , insbesondere die Abschnitte 5.3.2.1, "Front-End Section", und 5.3.2.2, "Hydrocarbon Fractionation Section", verwiesen.

Entsprechende Aufbereitungssequenzen können dabei insbesondere eine Demethanisierung und eine Deethanisierung in der angegebenen Reihenfolge oder in umgekehrter Reihenfolge umfassen, wie beispielsweise in der EP 3 940 042 A1 unter Verweis auf den Stand der Technik in den Absätzen [0004] bis [0009] offenbart. Auf den Offenbarungsgehalt dieser Absätze wird hier ausdrücklich Bezug genommen, insbesondere auch hinsichtlich der Bedeutung der vorliegend verwendeten Begriffe.

In der EP 3 940 042 A1 wird dabei ein Verfahren vorgeschlagen, bei dem Schritten einer Demethanisierung eine nichtkryogene Trennung, beispielsweise eine Druckwechseladsorption, nachgeschaltet ist. Auf diese Weise kann beispielsweise eine Wasserstofffraktion gewonnen werden.

Es besteht weiterhin der Bedarf nach verbesserten Verfahren und Anlagen entsprechender Art zur Bereitstellung von Wasserstofffraktionen.

### Offenbarung der Erfindung

Vor diesem Hintergrund werden ein Verfahren und eine Anlage zur Bereitstellung einer Wasserstofffraktion mit den Merkmalen der unabhängigen Patentansprüche vorgeschlagen. Ausgestaltungen sind Gegenstand der abhängigen Patentansprüche und der nachfolgenden Beschreibung.

Vor der Erläuterung der Vorteile der vorliegenden Erfindung werden nachfolgend einige bei der Beschreibung der Erfindung verwendete Begriffe näher definiert.

Komponentengemische (hier auch als Fraktionen bezeichnet) können im hier verwendeten Sprachgebrauch reich oder arm an einer oder mehreren Komponenten sein, wobei der Begriff "reich" für einen Gehalt von wenigstens 75%, 80%, 90%, 95% oder 99% und der Begriff "arm" für einen Gehalt von höchstens 25%, 20%, 1 0%, 5% oder 1% auf molarer, Gewichts- oder Volumenbasis stehen kann. Komponentengemische können im hier verwendeten Sprachgebrauch ferner angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde.

Das betrachtete Komponentengemisch ist "angereichert", wenn es zumindest den 1,5-fachen, 2-fachen, 5-fachen, 10-fachen, 100-fachen oder 1.000-fachen Gehalt der bezeichneten Komponenten aufweist, und "abgereichert", wenn es höchstens den 0,75-fachen, 0,5-fachen, 0,1-fachen, 0,01-fachen oder 0,001-fachen Gehalt der bezeichneten Komponenten aufweist. Ein "überwiegend" eine oder mehrere Komponenten enthaltendes Komponentengemisch ist insbesondere reich an dieser Komponenten im soeben erläuterten Sinn. Ist hier vorliegend beispielsweise von Wasserstoff oder Methan die Rede, kann hiermit auch eine Fraktion gemeint sein, die reich an der entsprechenden Komponente ist.

Ist hier davon die Rede, dass ein Komponentengemisch unter Verwendung eines anderen Komponentengemischs "gebildet" wird, sei darunter verstanden, dass das betrachtete Komponentengemisch zumindest einige der in dem anderen Komponentengemisch enthaltene oder diesen gebildete Komponenten aufweist. Ein Bilden eines Komponentengemischs aus einem anderen kann beispielsweise ein Abzweigen eines Teils des Komponentengemischs, ein Zuspeisen einer oder mehrerer weiterer Komponenten oder Komponentengemische, ein chemisches oder physikalisches Umsetzen zumindest einiger Komponenten, sowie ein Erwärmen, Abkühlen, Verdampfen, Kondensieren usw. umfassen. Ein "Bilden" eines Komponentengemischs aus einem anderen Komponentengemisch kann aber auch lediglich die Bereitstellung des anderen Komponentengemischs in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Zur Auslegung und spezifischen Ausgestaltung von Säulen, Kolonnen und anderen Trennapparaten sowie deren Einbauten, wie sie auch im Rahmen der vorliegenden Anmeldung eingesetzt werden können, sei ausdrücklich auf einschlägige Fachliteratur verwiesen (siehe beispielsweise Sattler, K.: Thermische Trennverfahren: Grundlagen, Auslegung, Apparate, 3. Auflage 2001, Weinheim, Wiley-VCH ). Insbesondere können entsprechende Trennapparate konventionelle Trennböden, insbesondere in Form strukturierter Bleche mit Ablaufeinrichtungen, oder geeignete Packungen aufweisen.

Wird nachfolgend der Begriff "Demethanisierung" verwendet, soll dieser kurz für einen Trennschritt stehen, in dem Kohlenwasserstoffe mit zwei oder zwei und mehr Kohlenstoffatomen von tiefer siedenden Verbindungen, insbesondere Methan und Wasserstoff, aus einem der Demethanisierung zugeführten Komponentengemisch, also einem "Einsatzgemisch" zur Demethanisierung, abgetrennt werden. Bei der Demethanisierung wird herkömmlicherweise eine Fraktion erhalten, die je nach Zusammensetzung des der Demethanisierung zugeführten Einsatzgemischs Kohlenwasserstoffe mit zwei oder zwei und mehr Kohlenstoffatomen enthält und stets arm an oder frei von tiefer siedenden Komponenten, insbesondere Methan und Wasserstoff, ist. Diese Fraktion wird typischerweise in flüssigem Zustand erhalten und auch als "schwere Fraktion" bezeichnet. Bei der Demethanisierung wird ferner eine Fraktion erhalten, die die erwähnten tiefer siedenden Verbindungen enthält und arm an oder frei von Kohlenwasserstoffen mit zwei oder zwei und mehr Kohlenstoffatomen ist. Diese Fraktion wird typischerweise in gasförmigem Zustand erhalten und auch als "leichte Fraktion" bezeichnet.

Vorliegend wird ein Verfahren zur Bereitstellung einer Wasserstofffraktion vorgeschlagen, bei dem ein Trenneinsatz, der Wasserstoff, Methan und höhere Kohlenwasserstoffe enthält, einer Trennung unterworfen wird. In Ausgestaltungen der vorliegenden Erfindung kann der Trenneinsatz unter Verwendung zumindest eines Teils eines Spaltgases gebildet werden, das durch Steamcracken eines kohlenwasserstoffhaltigen Steamcrackereinsatzes, beispielsweise von Naphtha oder eines ethanreichen Steamcrackereinsatzes, gebildet wird. Der Trenneinsatz enthält dabei zumindest einen Teil des Wasserstoffs, Methans und der höheren Kohlenwasserstoffe aus dem Spaltgas. Der Trenneinsatz kann unter Einsatz beliebiger Aufbereitungsschritte aus dem Spaltgas gebildet werden, die insbesondere eine Verdichtung, Trocknung, Kohlendioxidentfernung und ggf. Deethanisierung in jeglicher aus dem Stand der Technik bekannten Weise umfassen können.

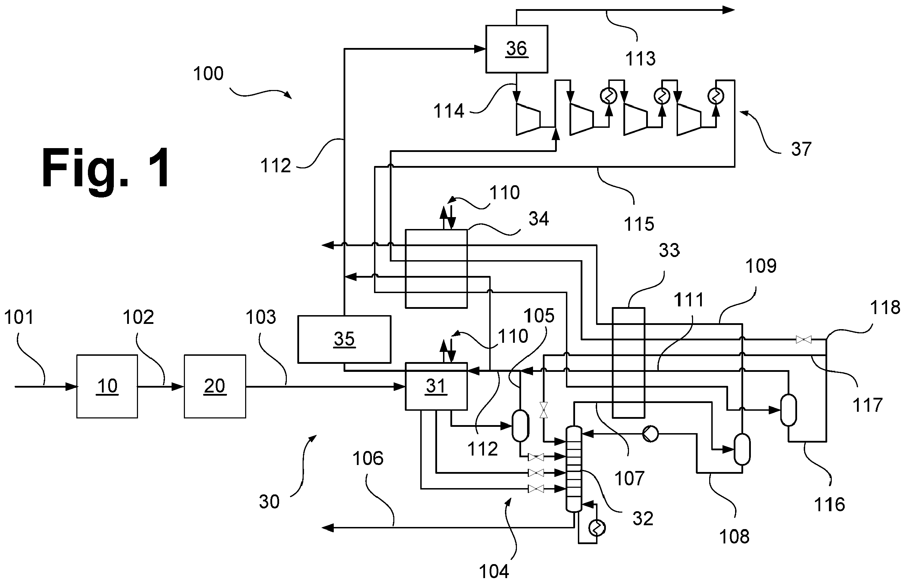

In der Trennung wird der Trenneinsatz als ein erster Kondensationseinsatz unter Erhalt eines kondensierten Anteils und unter Verbleib eines unkondensierten Anteils einer ersten Kondensation unterworfen, wobei die erste Kondensation insbesondere mehrstufig ausgeführt sein kann und im Wesentlichen vergleichbar wie in bekannten Demethanisierungsverfahren durchgeführt werden kann. Hierbei erfolgt eine stufenweise Abscheidung von Kondensaten, die jeweils gegenüber einen gasförmigen Rest an den höheren Kohlenwasserstoffen angereichert sind, aber noch gewisse Anteile Methan und Wasserstoff in gelöster Form enthalten können. Daher werden diese Kondensate zur Gewinnung im Wesentlichen "reiner" Fraktionen mit Methan einerseits und den höheren Kohlenwasserstoffen andererseits noch rektifiziert, wie auch in Figur 1 unten noch veranschaulicht und im Detail erläutert.

Die mehreren Kondensate zusammen bilden in dem hier zugrunde gelegten Verständnis den kondensierten Anteil. Ein unkondensierter Anteil verbleibt dabei am Ende der Kondensation auf dem geringsten Temperaturniveau. Alternativ zu der erläuterten mehrstufigen Kondensation kann in Ausgestaltungen der vorliegenden Erfindung grundsätzlich auch eine einstufige Kondensation erfolgen. Allgemein kann der kondensierte Anteil also eine oder mehrere Kondensatfraktionen umfassen und der unkondensierte Anteil kann eine oder mehrere unkondensierte Fraktionen umfassen.

Bei der (stufenweisen) ersten Kondensation verbleibt auf der niedrigsten Temperaturstufe, insbesondere bei ca. -97 °C auf einem Druck von ca. 30 bar, der bereits erwähnte unkondensierte Anteil, der typischerweise mehr als 70 Molprozent und bis zu 95 Molprozent Wasserstoff, aber auch noch Methan enthält. Die höheren Kohlenwasserstoffe sind typischerweise zu weniger als 20 Molprozent in dem unkondensierten Anteil aus der ersten Kondensation bzw. aus dem ersten Kondensationseinsatz enthalten.

Im Rahmen der vorliegenden Erfindung wird ferner ein Druckwechseladsorptionseinsatz unter Erhalt der Wasserstofffraktion und eines Druckwechseladsorptionsrestgases einer Druckwechseladsorption unterworfen. Die vorliegende Erfindung kombiniert also Aspekte einer Demethanisierung mit einer Druckwechseladsorption, wie sie grundsätzlich bekannt ist, aber in der vorliegenden Erfindung in einer besonders vorteilhaften Weise modifiziert wird.

Die Wasserstofffraktion wird dabei bei dem Adsorptionsdruck der Druckwechseladsorption gebildet, der typischerweise bei ca. 30 bar liegen kann. Das Druckwechseladsorptionsrestgas wird bei einem Desorptionsdruck bereitgestellt, typischerweise bei einem leicht überatmosphärischen Druck von beispielsweise ca. 1,2 bar. Das Druckwechseladsorptionsrestgas weist insbesondere einen Gehalt von 20 bis 60 Molprozent Wasserstoff sowie einen Methananteil auf.

Die vorliegende Erfindung sieht nun vor, dass ein zweiter Kondensationseinsatz ebenfalls unter Erhalt eines kondensierten Anteils und unter Verbleib eines unkondensierten Anteils einer zweiten Kondensation unterworfen wird, wobei der zweite Kondensationseinsatz unter Verwendung des Druckwechseladsorptionsrestgases oder eines Teils hiervon und einer Rückführteilmenge des kondensierten Anteils des zweiten Kondensationseinsatzes gebildet wird. Die zweite Kondensation wird im Gegensatz zur ersten Kondensation auf einer deutlich geringeren Temperatur durchgeführt, insbesondere bei ca. -147 °C. Auf diese Weise kann ein Großteil des im zweiten Kondensationseinsatz enthaltenen Methans sowie der höheren Kohlenwasserstoffe kondensiert werden. Der unkondensierte Anteil des zweiten Kondensationseinsatzes kann hingegen insbesondere einen Großteil des in dem zweiten Kondensationseinsatz enthaltenen Wasserstoffs enthalten. Auch die zweite Kondensation kann ein- oder mehrstufig unter Bildung einer oder mehrerer Kondensatfraktionen und Verbleib einer oder mehrerer unkondensierter Fraktionen erfolgen, die dann den kondensierten bzw. unkondensierten Anteil bilden.

Der Druckwechseladsorptionseinsatz wird im Rahmen der vorliegenden Erfindung unter Verwendung des unkondensierten Anteils des ersten Kondensationseinsatzes oder eines Teils hiervon und des unkondensierten Anteils des zweiten Kondensationseinsatzes oder eines Teils hiervon gebildet. Auf diese Weise kann auch der hierin enthaltene Wasserstoff in die Wasserstofffraktion überführt werden, so dass sich eine sehr gute Ausbeute ergibt.

Das Bilden des zweiten Kondensationseinsatzes umfasst ein Verdichten des Druckwechseladsorptionsrestgases oder dessen zur Bildung des zweiten Kondensationseinsatzes verwendeten Teils, und das Bilden des zweiten Kondensationseinsatzes umfasst ferner ein Entspannen, Erwärmen, Verdampfen und Verdichten der Rückführteilmenge des kondensierten Anteils des zweiten Kondensationseinsatzes. Die Verdichtung des Druckwechseladsorptionsrestgases oder dessen zur Bildung des zweiten Kondensationseinsatzes verwendeten Teils und der Rückführteilmenge erfolgt insbesondere unter Verwendung eines gemeinsamen Verdichters, in den die Rückführteilmenge beispielsweise auf einer Zwischenstufe eingespeist wird. Auch andere Ausgestaltungen sind möglich.

Für die genannte Verdichtung kann in Ausgestaltungen der vorliegenden Erfindung beispielsweise auch ein Getriebeturboverdichter zum Einsatz kommen, bei dem beispielsweise jede Verdichterstufe oder zumindest eine Verdichterstufe autonom mit einem Eintrittsleitrad geregelt werden kann. In einer derartigen Ausgestaltung ergibt sich ein besonderes effizienter Betrieb. Alternativ kann auch ein Einwellenturboverdichter zum Einsatz kommen, was insbesondere die Erstellungskosten reduziert.

Die zweite Kondensation umfasst zumindest eine Wärmeübertragung von dem zweiten Kondensationseinsatz auf die Rückführteilmenge des kondensierten Anteils des zweiten Kondensationseinsatzes. Im Rahmen der vorliegenden Erfindung wird damit gewissermaßen ein offener Kältekreislauf geschaffen, in dem das Druckwechseladsorptionsrestgas im Kreis geführt wird.

Bisher bekannte Verfahren zur Gewinnung von Wasserstofffraktionen aus Spaltgasen leiden typischerweise darunter, dass lediglich ca. 90% des Wasserstoffs als hochreiner Wasserstoff gewonnen werden kann und/oder dass noch relativ hohe Wasserstoffkonzentrationen in der Methanfraktion vorliegen. Zudem erfordert die Wasserstoffgewinnung hier typischerweise eine "Tail-End"-Wasserstoffextraktion, in der zumindest eine Druckwechseladsorption sowie zumeist zwei weitere Verdichter eingesetzt werden müssen. Typischerweise in herkömmlichen Lösungen verwendete Membranverfahren können zudem sehr kostenaufwendig sein.

Durch die nun vorgeschlagene Lösung werden mehrere Zielsetzungen simultan erreicht. Einerseits kann durch ein entsprechendes Verfahren eine Gewinnung des nahezu gesamten Wasserstoffes des Spaltgases, d.h. insbesondere mehr als 95%, als hochreiner Wasserstoff bei Drücken über 20 bar erfolgen. Entsprechend kann auch eine wasserstoffarme Tailgasfraktion erzeugt werden, die optional ebenfalls bei erhöhtem Druck, insbesondere mehr als 10 bar, vorliegen kann. Die Zielsetzung wird hierbei mit einem sehr kompakten Prozessdesign erreicht werden, welches lediglich einen weiteren Verdichter, eine Druckwechseladsorption und eine Coldbox erfordert.

Das vorgeschlagene Design erreicht eine maximale Wasserstoffausbeute von beispielsweise 97% mit lediglich wenigen Verlusten von Wasserstoff in die Methanfraktion (da sich im Zuge der Kondensationen geringe Mengen von Wasserstoff in der Flüssigphase "lösen"). Der Wasserstoff liegt bei hohem Druck und hoher Reinheit vor. Die Methanfraktion, die aus dem Kopfgas der Tieftemperaturrektifikation gebildet wird, ist entsprechend arm an Wasserstoff, was eine weitere Verarbeitung des Methans erleichtert, beispielsweise im Zuge der Herstellung von Synthesegas. Das Design ist vergleichsweise kompakt und erfordert keine Expander. Es werden, wie erwähnt, lediglich eine Druckwechseladsorption, ein zusätzlicher Verdichter sowie eine Coldbox und (für gewisse Ausgestaltungen wie die weiter unten beschriebene) eine kleine kalte Pumpe im kalten Teil einer entsprechenden Anlage benötigt.

Das hier vorgeschlagene Verfahren hat ferner den besonderen Vorteil, dass dem Verdichter in Form des Druckwechseladsorptionsrestgases und der Rückführteilmenge des kondensierten Anteils des zweiten Kondensationseinsatzes nur relativ wasserstoffarme Ströme zugeführt werden. Dies vereinfacht das Verdichterdesign aufgrund des relativ hohen Molekulargewichts. Herkömmliche Prozesse können demgegenüber im Nachteil sein, da hier unter Umständen wasserstoffreiches Gas für die Druckwechseladsorption "rückverdichtet" werden muss. Dies ist aufgrund des niedrigen Molekulargewichts sehr energieintensiv.

Wie bereits erwähnt, kann die vorliegende Erfindung im Zusammenhang mit Steamcrackingverfahren zum Einsatz kommen, ist aber hierauf nicht beschränkt. In Ausgestaltungen der vorliegenden Erfindung umfasst das Verfahren also, dass durch Steamcracken eines kohlenwasserstoffhaltigen Steamcrackereinsatzes ein Spaltgas gebildet wird, wobei unter Verwendung des Spaltgases oder eines Teils hiervon in einer Aufbereitung der Trenneinsatz bereitgestellt wird, und wobei der Wasserstoff, das Methan und die höheren Kohlenwasserstoffe jeweils zumindest zu einem Teil aus dem Spaltgas stammen.

In einer Ausgestaltung eines solchen Verfahrens umfasst die Aufbereitung eine Deethanisierung, so dass die höheren Kohlenwasserstoffe zu mehr als 90% Kohlenwasserstoffe mit zwei Kohlenstoffatomen sind.

Die erste Kondensation wird im Rahmen der vorliegenden Erfindung insbesondere auf einem ersten Kondensationsdruckniveau von 20 bis 45 bar, beispielsweise ca. 30 bar, und einem minimalen ersten Kondensationstemperaturniveau von -95 °C bis -100 °C, beispielsweise ca. -97 °C, durchgeführt. Das "minimale" erste Kondensationstemperaturniveau ist bei einer mehrstufigen Kondensation insbesondere das der "letzten" Kondensationsstufe. Vorteilhaft ist hierbei insbesondere, dass entsprechende Temperaturen mit "üblichen" Kältemitteln wie Ethylenkältemittel erreicht werden können.

Die zweite Kondensation wird insbesondere auf einem zweiten Kondensationsdruckniveau von 20 bis 45 bar, beispielsweise ca. 30 bar, und auf einem minimalen zweiten Kondensationstemperaturniveau von -130 °C bis -150 °C, beispielsweise ca. -147 °C, durchgeführt wird. Das zweite Kondensationsdruckniveau ist dabei insbesondere gleich dem oder höher als das erste Kondensationsdruckniveau, so dass keine Zwischenverdichtung erforderlich ist. In entsprechenden Ausgestaltungen werden also tiefere Temperaturen als sie mit Ethylenkältemittel erreicht werden können, nur für eine vergleichsweise geringe Teilmenge benötigt.

Die Erwärmung des unkondensierten Anteils des ersten Kondensationseinsatzes oder dessen zur Bildung des Druckwechseladsorptionseinsatzes verwendeten Teils und des unkondensierten Anteils des zweiten Kondensationseinsatzes der oder dessen zur Bildung des Druckwechseladsorptionseinsatzes verwendeten Teils wird insbesondere auf ein Temperaturniveau von über 0 °C, beispielsweise im Wesentlichen Umgebungstemperatur, vorgenommen, und bei die Erwärmung wird insbesondere auf dem ersten Kondensationsdruckniveau durchgeführt.

Der kondensierte Anteil des ersten Kondensationseinsatzes und ein Teil des kondensierten Anteils des zweiten Kondensationseinsatzes werden insbesondere einer Tieftemperaturrektifikation unterworfen, wie in einer Deethanisierung grundsätzlich bekannt. Diese kann auf einem Rektifikationsdruckniveau von 13 bis 15 bar, beispielsweise ca. 14 bar, durchgeführt werden. Hierbei wird eine Kopffraktion, die im Wesentlichen Methan aufweist, und eine Sumpfflüssigkeit, die im Wesentlichen die höheren Kohlenwasserstoffen aufweist, gebildet, wobei die höheren Kohlenwasserstoffe bei vorgeschalteter Deethanisierung im Wesentlichen Kohlenwasserstoffe mit zwei Kohlenstoffatomen oder ansonsten auch Kohlenwasserstoffe mit mehr als zwei Kohlenstoffatomen umfassen.

Das in der Tieftemperaturrektifikation gebildete Kopfgas kann insbesondere unter Wärmeübertragung auf die Rückführteilmenge abgekühlt und unter Erhalt eines kondensierten und eines nichtkondensierten Kopfgasanteils teilkondensiert werden, wobei der nichtkondensierte Kopfgasanteil oder ein Teil hiervon als Methanfraktion erwärmt und aus dem Verfahren ausgeführt und der kondensierte Kopfgasanteil oder ein Teil hiervon als Rücklauf in die Tieftemperaturrektifikation rückgeführt werden kann.

In dem vorgeschlagenen Verfahren kann der der Trenneinsatz insbesondere einen Gehalt von 20 bis 60 Molprozent Wasserstoff, von 2 bis 20 Molprozent Methan und von 40 bis 70 Molprozent der höheren Kohlenwasserstoffe aufweisen. Alternativ oder zusätzlich kann der unkondensierte Anteil des ersten Kondensationseinsatzes einen Gehalt von 70 bis 95 Molprozent Wasserstoff, von 5 bis 30 Molprozent Methan und von 1 bis 20 Molprozent der höheren Kohlenwasserstoffe aufweisen. Alternativ oder zusätzlich kann die Wasserstofffraktion einen Gehalt von 90 bis 100 Molprozent Wasserstoff, von 0 bis 10 Molprozent Methan und von 0 bis 10 Molprozent der höheren Kohlenwasserstoffe aufweisen. Alternativ oder zusätzlich kann das Druckwechseladsorptionsrestgas einen Gehalt von 20 bis 60 Molprozent Wasserstoff, von 20 bis 60 Molprozent Methan und von 2 bis 40 Molprozent der höheren Kohlenwasserstoffe aufweisen. Alternativ oder zusätzlich kann der unkondensierte Anteil des zweiten Kondensationseinsatzes einen Gehalt von 70 bis 95 Molprozent Wasserstoff, von 5 bis 30 Molprozent Methan und von 1 bis 20 Molprozent der höheren Kohlenwasserstoffe aufweisen. Alternativ oder zusätzlich kann der kondensierte Anteil des zweiten Kondensationseinsatzes einen Gehalt von 0 bis 10 Molprozent Wasserstoff, von 40 bis 99 Molprozent Methan und von 10 bis 60 Molprozent der höheren Kohlenwasserstoffe aufweisen.

Die vorgeschlagene Anlage zur Bereitstellung einer Wasserstofffraktion weist eine Trennanordnung auf und ist dafür eingerichtet, einen Trenneinsatz, der Wasserstoff, Methan und höhere Kohlenwasserstoffe enthält, einer Trennung in der Trennanordnung zu unterwerfen und dabei den Trenneinsatz als einen ersten Kondensationseinsatz unter Erhalt eines kondensierten Anteils und unter Verbleib eines unkondensierten Anteils einer ersten Kondensation zu unterwerfen, einen zweiten Kondensationseinsatz unter Erhalt eines kondensierten Anteils und unter Verbleib eines unkondensierten Anteils einer zweiten Kondensation zu unterwerfen, einen Druckwechseladsorptionseinsatz unter Erhalt der Wasserstofffraktion und eines Druckwechseladsorptionsrestgases einer Druckwechseladsorption zu unterwerfen, den zweiten Kondensationseinsatz unter Verwendung des Druckwechseladsorptionsrestgases oder eines Teils hiervon und einer Rückführteilmenge des kondensierten Anteils des zweiten Kondensationseinsatzes zu bilden, den Druckwechseladsorptionseinsatz unter Verwendung des unkondensierten Anteils des ersten Kondensationseinsatzes oder eines Teils hiervon und des unkondensierten Anteils des zweiten Kondensationseinsatzes oder eines Teils hiervon zu bilden, das Bilden des zweiten Kondensationseinsatzes ein Verdichten des Druckwechseladsorptionsrestgases oder von dessen zur Bildung des zweiten Kondensationseinsatzes verwendetem Teil und ein Entspannen, Verdampfen und Verdichten der Rückführteilmenge umfasst, und die zweite Kondensation eine Wärmeübertragung von dem zweiten Kondensationseinsatz auf die Rückführteilmenge umfasst.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben.

Figur 1 veranschaulicht eine Anlage gemäß einer Ausführungsform der Erfindung.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

In Figur 1 ist ein Verfahren gemäß einer Ausgestaltung der vorliegenden Erfindung veranschaulicht und insgesamt mit 100 bezeichnet.

In dem Verfahren 100 wird durch Steamcracken 10 eines kohlenwasserstoffhaltigen Steamcrackereinsatzes 101 in an sich bekannter Art ein Spaltgas 102 gebildet. Dieses kann in an sich ebenfalls bekannter Weise einem oder mehreren Aufbereitungs- oder Trennschritten 20 unterworfen werden, beispielsweise einem Quench, einer Verdichtung, einer Kohlendioxidentfernung und einer Trocknung. Der oder die Aufbereitungs- oder Trennschritte 20 können auch beispielsweise eine Deethanisierung an sich bekannter Art umfassen. Hierbei wird ein Stoffstrom 103 erhalten, der hier als "Trenneinsatz" bezeichnet wird.

Der Trenneinsatz 103 enthält mindestens Wasserstoff, Methan und höhere Kohlenwasserstoffe aus dem Spaltgas. Die höheren Kohlenwasserstoffe umfassen bei Einsatz einer Deethanisierung als Teil des oder der Aufbereitungs- oder Trennschritte 20 im Wesentlichen oder nur Kohlenwasserstoffe mit zwei Kohlenstoffatomen, in anderen Fällen können auch noch längerkettige Kohlenwasserstoffe in dem Trenneinsatz 103 enthalten sein.

Der Trenneinsatz 103 wird einer Trennung bzw. Trennanordnung 30 zugeführt, die an sich bekannte Aspekte einer Demethanisierung umfasst. So wird hier der Trenneinsatz 103 einer mehrstufigen Kondensation 31 unterworfen, die hier als "erste Kondensation" bezeichnet wird. Der Trenneinsatz 103 wird daher hier auch als "erster Kondensationseinsatz" bezeichnet. In der ersten Kondensation 31 werden dabei unter Verbleib einer unkondensierten Fraktion 105, die hier einen "unkondensierten Anteil" des ersten Kondensationseinsatzes 103 bildet, mehrere Kondensate, die hier insgesamt einen "unkondensierten Anteil" bilden und insgesamt mit 104 angegeben sind, bereitgestellt. Die erste Kondensation erfolgt hier auf dem bereits zuvor angegebenen ersten Kondensationsdruckniveau, typischerweise ca. 30 bar, und bis auf die ebenfalls erwähnte minimale Kondensationstemperatur bzw. das erste Kondensationstemperaturniveau, typischerweise ca. 97 °C.

Die Kondensate, also der unkondensierte Anteil des ersten Kondensationseinsatzes 103 werden entspannt und einer Tieftemperaturrektifikation 32 zugeführt, die auf dem ebenfalls bereits erwähnten Rektifikationsdruckniveau, typischerweise ca. 14 bar, durchgeführt wird. Eine in der Tieftemperaturrektifikation 32 erhaltene Sumpfflüssigkeit wird als Stoffstrom 106 aus dem Verfahren 100 ausgeleitet. Dieser enthält die höheren Kohlenwasserstoffe und ist im Wesentlichen frei von Wasserstoff und Methan.

Ein in der Tieftemperaturrektifikation 32 erhaltenes Kopfgas, das im Wesentlichen Methan enthält, wird in einem Wärmetauscher 33 abgekühlt und dabei auf ein geeignetes Kondensationstemperaturniveau, typischerweise ca. -146 °C, gebracht und entsprechend teilkondensiert. Nach einer nicht gesondert bezeichneten Phasentrennung wird ein flüssiger Anteil 108 mittels einer ebenfalls nicht gesondert bezeichneten Pumpe als Rücklauf in die Tieftemperaturrektifikation 32 zurückgeführt, wohingegen ein gasförmig verbliebener Anteil 109 als Methanfraktion aus dem Verfahren 100 ausgeführt wird. Der Anteil 109 wird dabei dem in dem Wärmetauscher 33 auf ein entsprechendes Temperaturniveau, typischerweise ca. -97 °C, erwärmt, und anschließend in einem weiteren Wärmetauscher 34 weiter auf ein entsprechendes Temperaturniveau, typischerweise ca. 25 °C, erwärmt.

In dem Wärmetauscher 34 sowie der ersten Kondensation 31, die ebenfalls einen Wärmetausch umfasst, werden jeweils geeignete Kältemittel 110, insbesondere Ethylenkältemittel, verwendet. Nach Vereinigung des unkondensierten Anteils 105 des ersten Kondensationseinsatzes 103 mit einem unten weiter erläuterten unkondensierten Anteil 111 eines zweiten Kondensationseinsatzes 115 wird ein auf diese Weise gebildeter Sammelstrom 112 parallel als Kältemittel in der ersten Kondensation 31 genutzt und dabei erwärmt sowie in dem Wärmetauscher 34 weiter erwärmt. Hierbei kann auch eine weitere Erwärmung in einer "Vorkühlung" 35 (z.B. zur Abkühlung des Spaltgases 102 irgendwo im Zuge der des oder der Aufbereitungsschritte 20) vorgenommen werden. Anstelle der veranschaulichten Bildung des Sammelstroms 112 können entsprechende Stoffströme auch unvereinigt durch die erwähnten Komponenten geführt werden.

Zur Vermeidung von Missverständnissen sei an dieser Stelle betont, dass sämtliche Wärmeübertragungsvorgänge 31, 33, 34 und 35 mit beliebigen Wärmetauschern in der hier dargestellten Weise, aber auch mit Wärmetauschern anderer Ausgestaltungen und Kombinationen, aufgeteilt auf mehrere Wärmetauscher, oder in Kombination miteinander durchgeführt werden können.

Der Sammelstrom 112, der hier auch als "Druckwechseladsorptionseinsatz" bezeichnet wird, wird einer Druckwechseladsorption 36 zugeführt, in der im Wesentlichen noch auf dem ersten Kondensationsdruckniveau eine Wasserstofffraktion 113 sowie einem leicht überatmosphärischen Druckniveau, insbesondere ca. 1,2 bar, ein Druckwechseladsorptionsrestgas 114 gebildet wird. Das Druckwechseladsorptionsrestgas 114 wird einer Verdichtung 37 in mehreren Stufen bis auf einen entsprechenden Druckniveau, typischerweise ca. 30 bar, unterworfen. Dieses Druckniveau wird hier auch als "zweites Kondensationsdruckniveau" bezeichnet. Idealerweise liegt das zweite Kondensationsdruckniveau auf dem gleichen Kondensationsdruckniveau wie das erste Kondensationsdruckniveau bzw. leicht darüber, so dass die oben beschriebene Vereinigung des unkondensierten Anteils 105 des ersten Kondensationseinsatzes 103 mit dem unten weiter erläuterten unkondensierten Anteil 111 des zweiten Kondensationseinsatzes 115 ohne weiteren Aufwand erfolgen kann.

Ein der Verdichtung 37 entnommener Stoffstrom bildet diesen "zweiten Kondensationseinsatz" 115. Dieser wird in den Wärmetauschern 34 und 33 auf ein geeignetes Temperaturniveau, das hier auch als "zweites Kondensationstemperaturniveau" bezeichnet wird, abgekühlt und dabei teilkondensiert. Nach einer wiederum nicht gesondert bezeichneten Phasentrennung wird ein Kondensat 116, das hier einen "kondensierten Anteil" des zweiten Kondensationseinsatzes 115 bildet, in Teilströme 117 und 118 aufgeteilt, wobei der Anteil 117 in die Tieftemperaturrektifikation 32 zurückgeführt. Eine Teilmenge 118 hiervon, die hier auch als "Rückführteilmenge" bezeichnet wird, wird entspannt, in den Wärmetauschern 33 und 34 verdampft, und auf einer Zwischenstufe und einem entsprechenden Druckniveau, typischerweise ca. 2,6 bar, der Verdichtung 37 wieder zugeführt wird. Der unkondensierte Anteil 111 wurde bereits erwähnt und dieser wird in dem Wärmetauscher 33 erwärmt.

## Patentansprüche

1. Verfahren (100) zur Bereitstellung einer Wasserstofffraktion (113), bei dem ein Trenneinsatz (103), der Wasserstoff, Methan und höhere Kohlenwasserstoffe enthält, einer Trennung (30) unterworfen wird, in der
- der Trenneinsatz (103) als ein erster Kondensationseinsatz (103) unter Erhalt eines kondensierten Anteils (104) und unter Verbleib eines unkondensierten Anteils (105) einer ersten Kondensation (31) unterworfen wird,
- ein zweiter Kondensationseinsatz (115) unter Erhalt eines kondensierten Anteils (116) und unter Verbleib eines unkondensierten Anteils (111) einer zweiten Kondensation (34, 33) unterworfen wird,
- ein Druckwechseladsorptionseinsatz (112) unter Erhalt der Wasserstofffraktion (113) und eines Druckwechseladsorptionsrestgases (114) einer Druckwechseladsorption (36) unterworfen wird,
- der zweite Kondensationseinsatz (115) unter Verwendung des Druckwechseladsorptionsrestgases (114) oder eines Teils hiervon und einer Rückführteilmenge (118) des kondensierten Anteils (116) des zweiten Kondensationseinsatzes (115) gebildet wird,
- der Druckwechseladsorptionseinsatz (112) unter Verwendung des unkondensierten Anteils (105) des ersten Kondensationseinsatzes (103) oder eines Teils hiervon und des unkondensierten Anteils des zweiten Kondensationseinsatzes (111) oder eines Teils hiervon gebildet wird,
- das Bilden des zweiten Kondensationseinsatzes (115) ein Verdichten (37) des Druckwechseladsorptionsrestgases (114) oder von dessen zur Bildung des zweiten Kondensationseinsatzes (115) verwendetem Teil und ein Entspannen, Verdampfen und Verdichten (37) der Rückführteilmenge (118) umfasst, und
- die zweite Kondensation (34, 33) eine Wärmeübertragung von dem zweiten Kondensationseinsatz (115) auf die Rückführteilmenge (118) umfasst.

2. Verfahren nach Anspruch 1, bei dem durch Steamcracken (10) eines kohlenwasserstoffhaltigen Steamcrackereinsatzes (101) ein Spaltgas (102) gebildet wird, wobei unter Verwendung des Spaltgases (102) oder eines Teils hiervon in einer Aufbereitung (20) der Trenneinsatz (103) bereitgestellt wird, und wobei der Wasserstoff, das Methan und die höheren Kohlenwasserstoffe jeweils zumindest zu einem Teil aus dem Spaltgas (102) stammen.

3. Verfahren nach Anspruch 2, bei dem die Aufbereitung (20) eine Deethanisierung umfasst und die höheren Kohlenwasserstoffe zu mehr als 90% Kohlenwasserstoffe mit zwei Kohlenstoffatomen sind.

4. Verfahren (100) nach einem der vorstehenden Ansprüche, bei dem die erste Kondensation (31) auf einem ersten Kondensationsdruckniveau von 20 bis 45 bar und einem minimalen ersten Kondensationstemperaturniveau von -95 °C bis -100 °C durchgeführt wird, und bei dem die zweite Kondensation (34,33) auf einem zweiten Kondensationsdruckniveau von 20 bis 45 bar und auf einem minimalen zweiten Kondensationstemperaturniveau von -130 °C bis -150 °C durchgeführt wird.

5. Verfahren (100) nach Anspruch 4, bei dem das zweite Kondensationsdruckniveau gleich dem oder höher als das erste Kondensationsdruckniveau ist.

6. Verfahren (100) nach einem der vorstehenden Ansprüche, bei dem eine Erwärmung des unkondensierten Anteils (105) des ersten Kondensationseinsatzes (103) oder dessen zur Bildung des Druckwechseladsorptionseinsatzes (112) verwendeten Teils und des unkondensierten Anteils (111) des zweiten Kondensationseinsatzes (115) der oder dessen zur Bildung des Druckwechseladsorptionseinsatzes (112) verwendeten Teils auf ein Temperaturniveau über 0 °C vorgenommen wird, und bei dem die Erwärmung auf dem ersten Kondensationsdruckniveau durchgeführt wird.

7. Verfahren (100) nach einem der vorstehenden Ansprüche, bei dem der kondensierte Anteil (104) des ersten Kondensationseinsatzes (103) und ein Teil des kondensierten Anteils (116) des zweiten Kondensationseinsatzes (116) einer Tieftemperaturrektifikation (32) unterworfen werden.

8. Verfahren (100) nach Anspruch 7, bei dem ein in der Tieftemperaturrektifikation (32) gebildetes Kopfgas unter Wärmeübertragung auf die Rückführteilmenge (118) abgekühlt und unter Erhalt eines kondensierten und eines nichtkondensierten Kopfgasanteils teilkondensiert wird, wobei der nichtkondensierte Kopfgasanteil oder ein Teil hiervon erwärmt und aus dem Verfahren (100) ausgeführt wird und der kondensierte Kopfgasanteil oder ein Teil hiervon als Rücklauf in die Tieftemperaturrektifikation (32) rückgeführt wird.

9. Verfahren (100) nach einem der vorstehenden Ansprüche, bei dem
- der Trenneinsatz (103) einen Gehalt
von 20 bis 60 Molprozent Wasserstoff,
von 2 bis 20 Molprozent Methan und
von 40 bis 70 Molprozent der höheren Kohlenwasserstoffe
und/oder
- der unkondensierte Anteil (105) des ersten Kondensationseinsatzes (103) einen Gehalt
von 70 bis 95 Molprozent Wasserstoff,
von 5 bis 30 Molprozent Methan und
von 1 bis 20 Molprozent der höheren Kohlenwasserstoffe
und/oder
- die Wasserstofffraktion (113) einen Gehalt
von 90 bis 100 Molprozent Wasserstoff,
von 0 bis 10 Molprozent Methan und
von 0 bis 10 Molprozent der höheren Kohlenwasserstoffe
und/oder
- das Druckwechseladsorptionsrestgas (114) einen Gehalt
von 20 bis 60 Molprozent Wasserstoff,
von 20 bis 60 Molprozent Methan und
von 2 bis 40 Molprozent der höheren Kohlenwasserstoffe
und/oder
- der unkondensierte Anteil (111) des zweiten Kondensationseinsatzes (115) einen Gehalt
von 70 bis 95 Molprozent Wasserstoff,
von 5 bis 30 Molprozent Methan und
von 1 bis 20 Molprozent der höheren Kohlenwasserstoffe
und/oder
- kondensierte Anteil (116) des zweiten Kondensationseinsatzes (115) einen Gehalt
von 0 bis 10 Molprozent Wasserstoff,
von 40 bis 99 Molprozent Methan und
von 10 bis 60 Molprozent der höheren Kohlenwasserstoffe
aufweist.

10. Verfahren (100) nach einem der vorstehenden Ansprüche, bei dem für die Verdichtung (37) ein Getriebeturboverdichter oder ein Einwellenturboverdichter mit mehreren Verdichterstufen verwendet wird.

11. Anlage zur Bereitstellung einer Wasserstofffraktion (113), die eine Trennanordnung aufweist und dafür eingerichtet ist, einen Trenneinsatz (103), der Wasserstoff, Methan und höhere Kohlenwasserstoffe enthält, einer Trennung (30) in der Trennanordnung zu unterwerfen und dabei
- den Trenneinsatz (103) als einen ersten Kondensationseinsatz (103) unter Erhalt eines kondensierten Anteils (104) und unter Verbleib eines unkondensierten Anteils (105) einer ersten Kondensation (31) zu unterwerfen,
- einen zweiten Kondensationseinsatz (115) unter Erhalt eines kondensierten Anteils (116) und unter Verbleib eines unkondensierten Anteils (111) einer zweiten Kondensation (34, 33) zu unterwerfen,
- einen Druckwechseladsorptionseinsatz (112) unter Erhalt der Wasserstofffraktion (113) und eines Druckwechseladsorptionsrestgases (114) einer Druckwechseladsorption (36) zu unterwerfen,
- den zweiten Kondensationseinsatz (115) unter Verwendung des Druckwechseladsorptionsrestgases (114) oder eines Teils hiervon und einer Rückführteilmenge (118) des kondensierten Anteils (116) des zweiten Kondensationseinsatzes (115) zu bilden,
- den Druckwechseladsorptionseinsatz (112) unter Verwendung des unkondensierten Anteils (105) des ersten Kondensationseinsatzes (103) oder eines Teils hiervon und des unkondensierten Anteils des zweiten Kondensationseinsatzes (111) oder eines Teils hiervon zu bilden,
- das Bilden des zweiten Kondensationseinsatzes (115) ein Verdichten (37) des Druckwechseladsorptionsrestgases (114) oder von dessen zur Bildung des zweiten Kondensationseinsatzes (115) verwendetem Teil und ein Entspannen, Verdampfen und Verdichten (37) der Rückführteilmenge (118) umfasst, und
- die zweite Kondensation (34, 33) eine Wärmeübertragung von dem zweiten Kondensationseinsatz (115) auf die Rückführteilmenge (118) umfasst.

12. Anlage nach Anspruch 11, die zur Durchführung eines Verfahrens (100) nach einem der Ansprüche 1 bis 10 eingerichtet ist.
